# EUROPEAN PATENT APPLICATION

(11) **EP 4 603 780 A1**
(43) Date of publication of application: **20.08.2025**
(21) Application number: 24157963.0
(22) Date of filing: 15.02.2024
(51) Int. Cl.: F28D 9/00, B33Y 80/00, F28F 3/04

(54) **METHOD OF PRODUCING A REINFORCED HEAT TRANSFER PLATE USING ADDITIVE MANUFACTURING**

(71) Applicant: Alfa Laval Corporate AB, 221 00 Lund (SE)
(72) Inventor: NILSSON, Magnus, 247 51 DALBY (SE); ÖHLIN, Joakim, 429 35 KULLAVIK (SE)
(74) Representative: Alfa Laval Attorneys

(57) **Abstract**

The present invention relates to a method of producing a reinforced heat transfer plate. The method comprising providing a heat transfer plate comprising an upper portion, a central portion and a lower portion arranged in succession along a longitudinal centre axis of the heat transfer plate. The upper portion comprising a first porthole and a second porthole, the lower portion comprising a third porthole and a fourth porthole, and, the central portion comprising a heat transfer area provided with a heat transfer pattern. The method further comprising identifying an area under stress of the heat transfer plate and applying a metal reinforcement onto the heat transfer plate by the use of additive manufacturing in the area under stress of the heat transfer plate.

## Description

The present invention relates to method of producing reinforced heat transfer plate, a reinforced heat transfer plate and a plate heat exchanger comprising reinforced heat transfer plate.

### Introduction

Plate heat exchangers typically comprise a number of heat transfer plates arranged in a stack in-between two end plates. The heat transfer plates are typically made of pressed metal sheet material. One well-known type of plate heat exchanger is the so called gasketed plate heat exchanger in which gaskets are arranged between the heat transfer plates. The gaskets are typically positioned in gasket grooves which extend along edges of the heat transfer plates. The heat transfer plates are pressed towards each other between the end plates, also known as front plate and pressure plate, whereby the gaskets seal between the heat transfer plates. The gaskets define parallel plate interspaces between the heat transfer plates through which plate interspaces two fluids having different temperatures alternately can flow for transferring heat from one fluid to the other.

Each heat transfer plate comprises an upper portion having two portholes, a lower portion having two further portholes and a central portion defining a heat transfer area. Typically, the heat transfer plate further comprises distribution areas adjacent the portholes. The purpose of the distribution areas of the heat transfer plates is to spread a fluid entering the ports across the width of the heat transfer plates before the fluid reaches the heat transfer areas, and to collect the fluid and guide it out of the ports after it has passed the heat transfer areas. The purpose of the heat transfer area is to transfer heat between the fluids. Typically, adjacent plate interspace alternatingly communicates with one porthole in the upper portion and one porthole in the lower portion so that different fluids flow in adjacent plate interspaces.

In so-called semi-welded heat exchangers, the heat transfer plates are arranged two-by-two in the form of cassettes in which the two heat transfer plates are welded together. The cassettes of two heat transfer plates are then arranged with a gasket in between the cassettes such that one fluid flows in plate interspaces defined within the welded cassette and the other fluid flows in plate interspaces defined between the cassettes.

The heat transfer plates are exposed to both structural and mechanical stress for various reasons. Structural stress may affect the heat transfer plates at the tightening bolts, carrying bars and port connections. Mechanical stress may affect the heat transfer plates due to differently pressurised fluids in the adjacent plate interspaces. Heat transfer plates will always have some areas that are mechanically weaker than other areas. Such areas are prone to damage and malfunction. Also, large heat transfer plates are inherently weaker from a structural and mechanical point of view compared to smaller heat transfer plates. Large heat transfer plates become heavy due to their size while the thickness of the heat transfer plates should be as small as possible causing an increase in the risk of malfunction at the weaker areas and the areas affected by structural and mechanical stress.

Reinforcements can be used to improve the mechanical and structural strength of the heat transfer plates. Such reinforcement can be applied by spot welding thicker plates etc. at locations of high stress. However, it is difficult to reach perfect alignment, the reinforcement can affect the thermal- and flow performance and they can be difficult to clean.

In relation to prior art, US7032654 describes a heat exchanger plate having microfeatures that can be made by adding a material at preselected sites on the surface of the plate by e.g. plasma spray, powder spray or vapor deposition.

US20190283115 describes a method for reinforcing a metal body by forming local reinforcements by additive manufacturing in areas under stress. The area of the surface to be reinforced may first be prepared by e.g. machining, brushing, degreasing, shot blasting or depositing.

CN106425314 describes a method reinforcing an object by obtaining local reinforcing ribs by using additive manufacturing.

CN107737932 describes how additive manufacturing is used to reinforce a titanium alloy.

CN111872392 describes an additive manufacturing method for locally reinforcement of an iron-base alloy part.

JP 4330678 describes a plate heat exchanger having hanger parts with welds. Two plates are welded together in a cassette structure according to conventional art.

WO 89/08815 describes a heat exchanger in the form of a rotor having a reinforced coating of sprayed-on metal. A strengthening of the edges of the thin rotor layers is achieved by metal spraying the end face of the rotor.

CN209524788 describes an upper guide reinforcing structure for a plate heat exchanger. This reinforcing structure is in the form of reinforcing plates welded on two sides of the I-beam constituting the upper guide rod.

CN113145709 describes a soft die structure with a reinforced additive manufactured insert. The insert material is die steel with strength and hardness greater than those for the low-melting point alloy.

EP 3816567 B1 relates to a plate-type heat exchanger having a 3D printed support element mounted in a sealed opening area.

Benjamin Kabil, "Parameter study of the diagonal on a gasketed plate heat exchanger" describes how different parameters related to the gasket groove of a heat exchanger affect the mechanical performance of the product.

G.S.M. Martins et al, "Structural analysis of gasketed plate heat exchangers", describes how to evaluate the structural behavior of gasketed plate heat exchangers through experimental and numerical analysis.

It is therefore an object of the present invention to provide technologies for reinforcing heat transfer plates.

### Summary of the invention

The above object can according to a first aspect of the present invention be realized by a method of producing a reinforced heat transfer plate, the method comprising:
providing a heat transfer plate comprising an upper portion, a central portion and a lower portion arranged in succession along a longitudinal centre axis of the heat transfer plate, the upper portion comprising a first porthole and a second porthole, the lower portion comprising a third porthole and a fourth porthole, and, the central portion comprising a heat transfer area provided with a heat transfer pattern,
identifying an area under stress of the heat transfer plate, and
applying a metal reinforcement onto the heat transfer plate by the use of additive manufacturing, the metal reinforcement being applied in the area under stress of the heat transfer plate.

The heat transfer plate is made of thin sheet metal material and is typically corrugated. A plurality of heat transfer plates is used in a plate heat exchanger in which a first fluid on one side of the heat transfer plate exchange heat with a second fluid on the other side of the heat transfer plate. The portholes typically constitute inlet and outlet openings allowing fluid to enter and exit the plate interspace. In use, each plate interspace is typically in fluid communication with an inlet opening and an outlet opening located one in the upper portion and one in the lower portion. A diagonal gasket is used for preventing the fluid from entering the port hole of the other fluid.

An area under stress of the heat transfer plate can be an area of the heat transfer plate which is inherently weaker and/or an area of the heat transfer plate which is exposed to high mechanical and/or structural stress. The area under stress of the heat transfer plate can be identified e.g., by performing experiments or by using numerical simulations.

By using the additive manufacturing technologies, also known as 3D printing, extra metal material can be added in an area identified as being under stress as described above to make this area stiffer. The metal reinforcement by additive manufacturing can be applied by various metal 3D printing technologies such as wire DED process. The metal material used in the additive manufacturing process can be the same as the material of the heat transfer plate or it can be a different material.

The benefit using additive manufacturing is an increase of alignment and accuracy of the application of the reinforcing material onto the heat transfer plate. In this way the above-mentioned drawbacks with existing technologies can be avoided. It also reduces the amount of waste generated.

According to a further embodiment of the first aspect, the heat transfer plate being provided with guiding arrangements at an upper edge of the upper portion and/or at a lower edge of the lower portion, the area under stress of the heat transfer plate being adjacent the guiding arrangements.

The guiding arrangements interact with the carrying bars which support the stack of heat transfer plates. A reinforcement is thus often required adjacent the guiding arrangements of the heat transfer plates as this is an area under stress of the heat transfer plate. The guiding arrangements should be able to support the weight of the stack of heat transfer plates without bulging, buckling or bending. For large heat transfer plates, the weight of each heat transfer plate can be significant compared to the thickness of the plate material.

According to a further embodiment of the first aspect, the metal reinforcement being applied in the form of a string of metal following an outline of the guiding arrangement. In this way the weight of the stack of heat transfer plates can be supported by additional material without having to use larger welded plates etc. This also simplifies cleaning.

According to a further embodiment of the first aspect, the guiding arrangement being provided as a recess in the upper portion and/or lower portion of the heat transfer plate. The recess can be used for accommodating the carrying bar and supporting the weight of the stack of heat transfer plates. The recess can be U-shaped, Y-shaped, X-shaped or have any other suitable shape for accommodating the carrying bar.

According to a further embodiment of the first aspect, the guiding arrangement being symmetrically formed relative to the longitudinal centre axis. In this way the carrying bar can be aligned with the centre of gravity of the stack of heat transfer plates.

According to a further embodiment of the first aspect, the area under stress of the heat transfer plate being adjacent the first, second, third and/or fourth porthole.

The area around the portholes is often under stress due to being adjacent the corners of the heat transfer plate, the presence of port connectors and the limited space around the portholes. A reinforcement is thus often required adjacent the port holes of the heat transfer plates as this is an area under stress of the heat transfer plate.

According to a further embodiment of the first aspect, the heat transfer plate comprising an upper distribution area in the upper portion being provided with an upper distribution pattern being different from the heat transfer pattern and/or a lower distribution area in the lower portion being provided with a lower distribution pattern being different from the heat transfer pattern, the area under stress of the heat transfer plate being in the upper distribution area and/or in the lower distribution area.

The distribution area is often under stress due to the large pressure difference between the plate interspaces in this area. Further, the diagonal gasket groove of the distribution area is an area under stress of the heat transfer plate as it only appears in every second plate interspace. The diagonal gasket groove is used for preventing the fluid from entering the port hole of the other fluid. A reinforcement is thus often required in the distribution area of the heat transfer plate as this is an area under stress of the heat transfer plate. In particular, the reinforcement can be located in the diagonal gasket groove.

According to a further embodiment of the first aspect, the area under stress of the heat transfer plate being the heat transfer area.

The heat transfer area is typically the largest area of the heat transfer plate, and for large heat transfer plates it may be necessary to also reinforce the heat transfer area.

According to a further embodiment of the first aspect, the metal reinforcement being provided in the form of a contact point intended to abut against an adjacent heat transfer plate.

Further contact points between the heat transfer plates can be provided by additive manufacturing at an area under stress of the heat transfer plate to act as a reinforcement of the heat transfer plates.

According to a further embodiment of the first aspect, the heat transfer pattern and/or the upper distribution pattern and/or the lower distribution pattern being provided with corrugations extending obliquely relative to the longitudinal centre axis, the metal reinforcement being provided in the form of a string of metal extending along the corrugations and/or across the corrugations.

The corrugations of the heat transfer plate often extend in an oblique angle relative to the longitudinal centre axis to form a cross corrugated pattern with an opposing heat transfer plate. It may therefore be advantageous to let the metal reinforcement extend in an oblique angle as well. To reduce the influence of the reinforcement on the flow along the corrugations, the reinforcement can be made as a string of metal extending along the corrugations, whereas to increase the influence of the reinforcement on the flow along the corrugations, the reinforcement can be made as a string of metal extending across the corrugations.

According to a further embodiment of the first aspect, the string of metal fills a part of a bottom of the corrugations.

In this way the influence of the reinforcement on the flow can be reduced. In addition, the bottom of the corrugation is often an area under stress of the heat transfer plate.

According to a further embodiment of the first aspect, the heat transfer plate being provided with an indentation at the area under stress of the heat transfer plate, the metal reinforcement being applied such that it fills the indentation.

To further reduce the influence of the reinforcement on the flow, the reinforcement may be applied at a location on the plate which has been provided by a specific indentation intended to be filled by metal by additive manufacturing. The indentation can be made by pressing.

According to a further embodiment of the first aspect, the continuous length of the reinforcement exceeds 10% of the width of the heat transfer plate, preferably exceeding 20% of the width of the heat transfer plate, more preferably exceeding 30% of the width of the heat transfer plate.

The reinforcement should preferably define a continuous length to contribute to the bending strength of the heat transfer plate.

The above object can according to a second aspect of the present invention be realized by a reinforced heat transfer plate comprising an upper portion, a central portion and a lower portion arranged in succession along a longitudinal centre axis of the reinforced heat transfer plate, the upper portion comprising a first porthole and a second porthole, the lower portion comprising a third porthole and a fourth porthole, and, the central portion comprising a heat transfer area provided with a heat transfer pattern, the reinforced heat transfer plate being provided with a reinforcement having been applied by additive manufacturing in an area under stress of the reinforced heat transfer plate.

The reinforced heat transfer plate according to the second aspect of the present invention can be produced using the method according to the first aspect of the present invention.

The above object can according to a third aspect of the present invention be realized by a plate heat exchanger comprising a plurality of heat transfer plates according to the first aspect with gaskets in between heat transfer plates.

Heat exchanger plates having reinforcements applied by additive manufacturing can preferably be used with gasketed plate heat exchangers.

According to a further embodiment of the third aspect, the heat transfer plates are alternately provided with a gasket and alternately provided with a permanent joint, such as a weld.

Heat exchanger plates having reinforcements applied by additive manufacturing can preferably be used with semi-welded heat exchangers.

### Brief description of the drawings

FIG. 1A is a perspective view of a plate heat exchanger.
FIG. 1B is a perspective view of a heat transfer plate in a plate heat exchanger.
FIG. 2A is a perspective view of a heat transfer plate.
FIG. 2B is a perspective view of a guiding arrangement having a 3D printed reinforcement.
FIG. 2C is a perspective view of a corrugation having a 3D printed reinforcement.
FIG. 2D is a perspective view of a port area of a heat transfer plate.
FIG. 2E is a perspective view of a port hole having a 3D printed reinforcement.
FIG. 2F is a perspective view of diagonal having a 3D printed reinforcement.

### Detailed description of the drawings

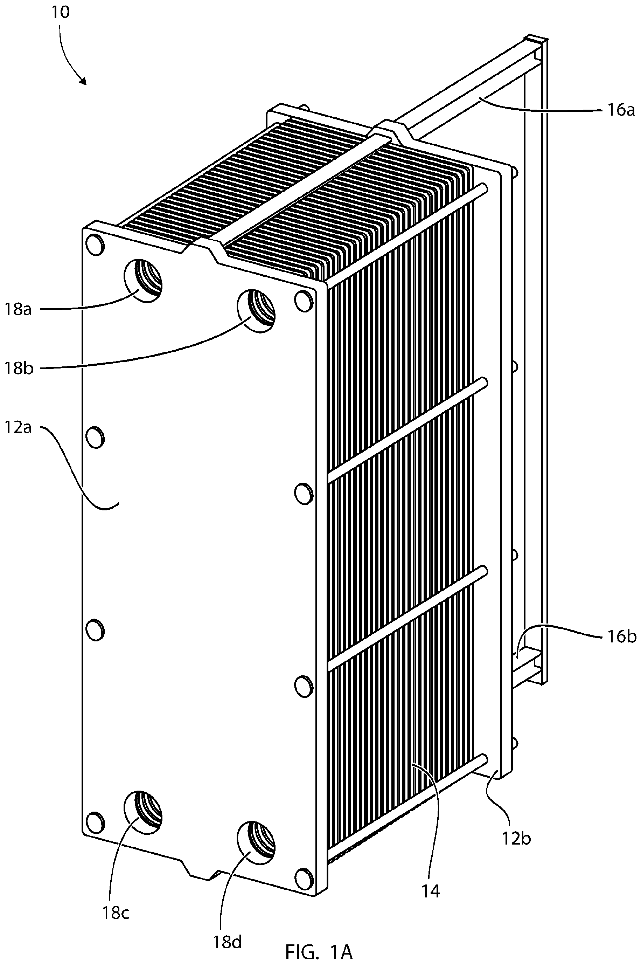

FIG. 1A is a perspective view of a plate heat exchanger 10. The plate heat exchanger 10 comprises a front plate 12a, a pressure plate 12b and a plurality of heat transfer plates 14 located between the front plate 12a and the pressure plate 12b. Tie bolts (not shown) are used for keeping the plate heat exchanger 10 together. The heat transfer plates 14 in the present case have gaskets (now shown) in between themselves. Each heat transfer plate 14 can be separated by a gasket, or the heat transfer plates 14 can alternatingly being separated with a gasket and being permanently joined.

The heat transfer plates 14 are further located between an upper carrying bar 16a and a lower carrying bar 16b which support the heat transfer plates 14. The front plate 12a is provided with port holes 18a 18b 18c 18d located at the corners of the front plate 12a for attachment of pipes for introducing and removing fluids from the plate heat exchanger 10. The port holes 18a 18b 18c 18d are fluidly connected in pairs to alternating plate interspaces.

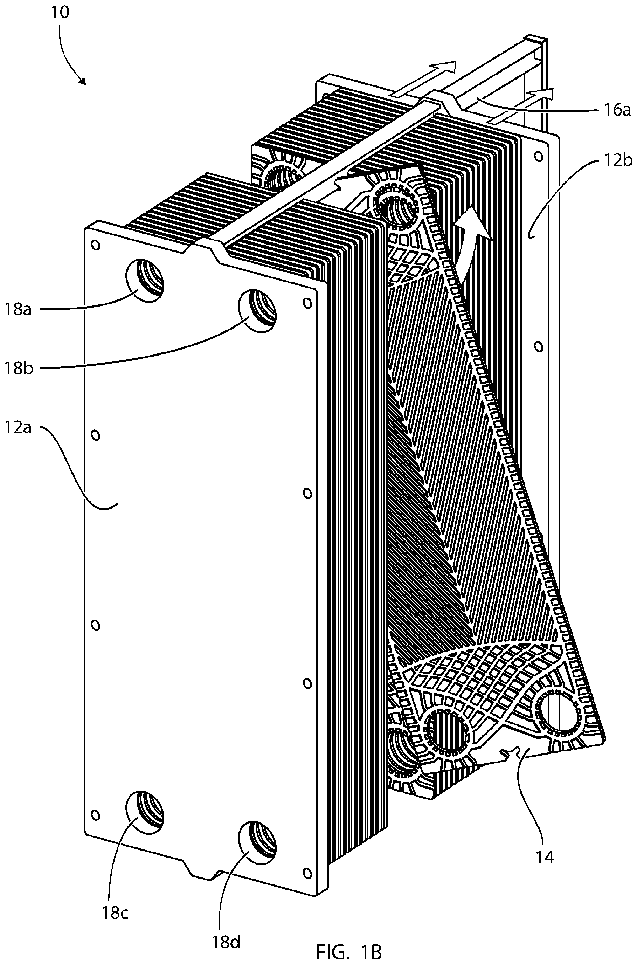

FIG. 1B is a perspective view of a heat transfer plate 14 in a plate heat exchanger 10. Each heat transfer plate 14 establishes the alternating plate interspace together with an adjacent plate. Each heat transfer plate 14 can be removed from the plate heat exchanger 10 by loosening the tie bolts (not shown), moving the pressure plate 12b and lifting the heat transfer plate 14 from the carrying bars 16a 16b.

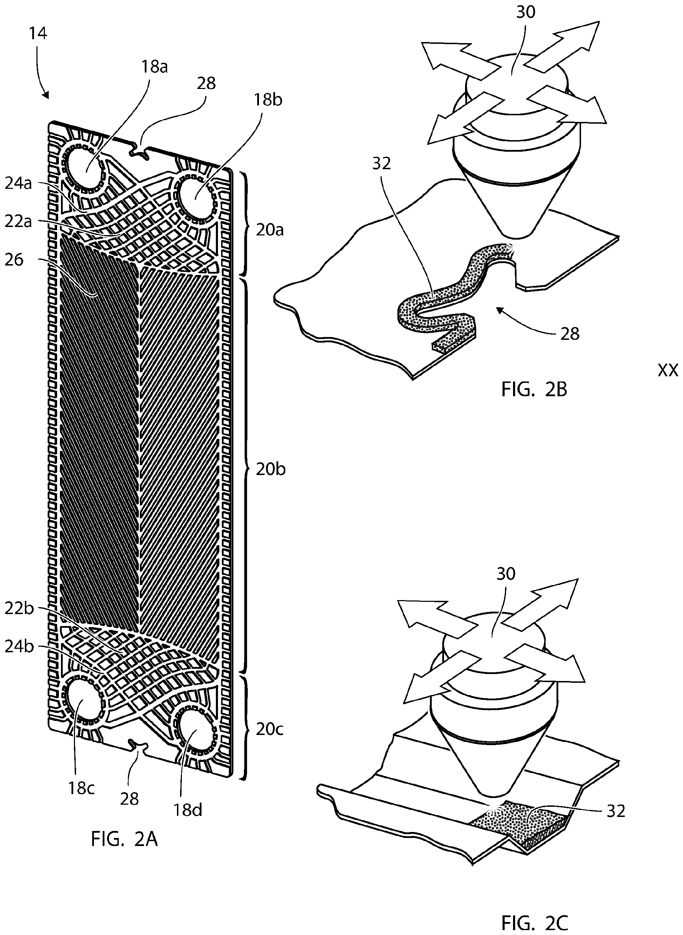

FIG. 2A is a perspective view of a heat transfer plate 14. The heat transfer plate 14 comprises an upper portion 20a, a heat transfer portion 20b and a lower portion 20c. The heat transfer portion 20b comprises corrugations for increasing the heat transfer through the heat transfer plate 14. The upper portion 20a comprises an upper distribution area 22a and the lower portion 20c comprises a lower distribution area 22b. The distribution areas 22a 22b are used for receiving a fluid entering the plate interspace from one of the port holes 18a 18b 18c 18d and spreading it over the width of the heat transfer portion 22b and/or for collecting the fluid from the heat transfer portion 22b and guide it out of the plate heat exchanger via one of the port holes 18a 18b 18c 18d. The distribution area 22a comprises a diagonal gasket groove 24a and the distribution area 22b comprises a corresponding diagonal gasket groove 24b. The diagonal gasket groove is used for accommodating a diagonal gasket (not shown) for preventing the fluid from entering the port hole of the other fluid. Each of the upper and lower portions 20a 20c further comprising a guiding arrangement 28 adjacent an upper or lower edge for interacting with the carrying bar. The guiding arrangement 28 is formed as a recess in the heat transfer plate 14.

FIG. 2B is a perspective view of a 3D printer nozzle 30 and guiding arrangement 28 having a 3D printed reinforcement 32. The guiding arrangement 28 is an area under stress of the heat transfer plate 14 as it supports the weight of the heat transfer plate 14. To strengthen this part and increase its structural stability a metal reinforcement 32 can be applied by the use of additive manufacturing applied by 3D printer nozzle 30. To save on material, the metal reinforcement 32 is preferably made as a string of metal following the outline of the guiding arrangement 32. In this way damage and bucking of the plate material at the guiding arrangement 32 can be avoided.

FIG. 2C is a perspective view of a corrugation having a 3D printed reinforcement. The reinforcement 30 can be applied as a string of metal applied by additive manufacturing. The reinforcement 32 can be applied at a location of mechanical stress identified on the heat transfer plate 14 identified by simulations or experiments. The reinforcement 32 can be applied as a string of metal at the bottom of the corrugations and preferably be applied in an indentation on the heat transfer plate 14 at a location of mechanical stress. In this way the influence on the flow can be minimized.

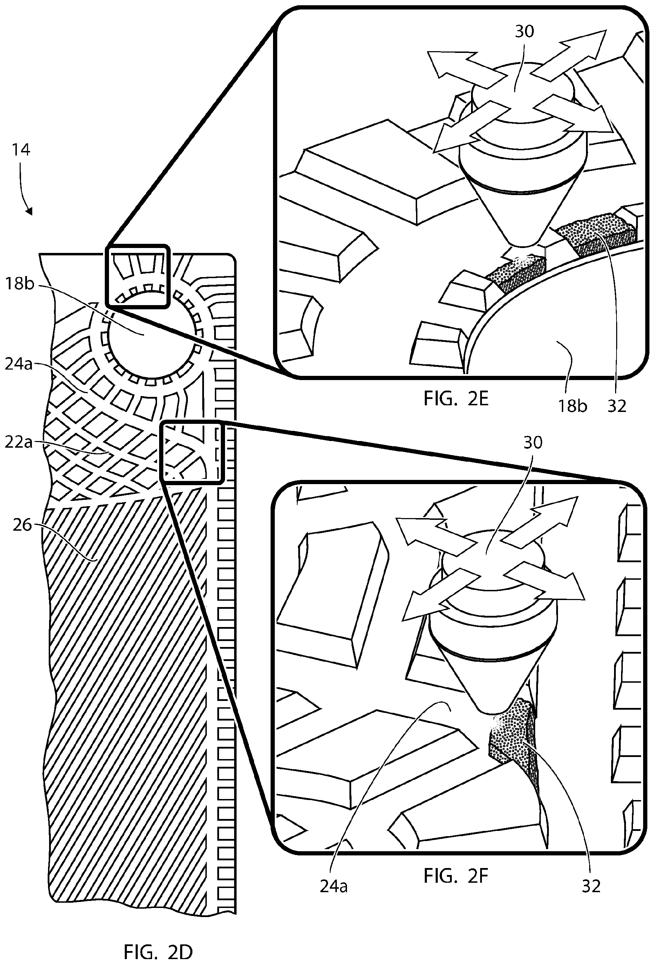

FIG. 2D is a perspective view of an area adjacent a port hole 18b of a heat transfer plate 14. The area around the porthole 18b can be under stress due to being adjacent the corners of the heat transfer plate 18, the presence of port connectors and the limited space around the portholes.

FIG. 2E is a perspective view of a port hole 18b having a 3D printed reinforcement along its outline. A metal reinforcement 32 can be 3D printed adjacent the port hole 18b of the heat transfer plate 14 as this is an area under stress of the heat transfer plate 14.

FIG. 2F is a perspective view of diagonal gasket groove 24a having a 3D printed reinforcement 32. The diagonal gasket groove 24a of the distribution area is an area under stress of the heat transfer plate as it only appears in every second plate interspace. A reinforcement 32 can thus be applied at the diagonal gasket groove 24a heat transfer plate 14 to reinforce this area under stress of the heat transfer plate 14.

Although the above plate heat exchanger is described as having gaskets between the heat transfer plates, the present technology can also be used for permanently joined plate heat exchangers such as brazed and fusion bonded heat exchangers.

## Claims

1. A method of producing a reinforced heat transfer plate, the method comprising:
providing a heat transfer plate comprising an upper portion, a central portion and a lower portion arranged in succession along a longitudinal centre axis of the heat transfer plate, the upper portion comprising a first porthole and a second porthole, the lower portion comprising a third porthole and a fourth porthole, and, the central portion comprising a heat transfer area provided with a heat transfer pattern,
identifying an area under stress of the heat transfer plate, and
applying a metal reinforcement onto the heat transfer plate by the use of additive manufacturing, the metal reinforcement being applied in the area under stress of the heat transfer plate.

2. The method according to claim 1, wherein the heat transfer plate being provided with guiding arrangements at an upper edge of the upper portion and/or at a lower edge of the lower portion, the area under stress of the heat transfer plate being adjacent the guiding arrangements.

3. The method according to claim 2, wherein the metal reinforcement being applied in the form of a string of metal following an outline of the guiding arrangement

4. The method according to any of the claims 2-3, wherein the guiding arrangement being provided as a recess in the upper portion and/or lower portion of the heat transfer plate.

5. The method according to any of the claims 2-4, wherein the guiding arrangement being symmetrically formed relative to the longitudinal centre axis.

6. The method according to any of the preceding claims, wherein the area under stress of the heat transfer plate being adjacent the first, second, third and/or fourth porthole.

7. The method according to any of the preceding claims, wherein the heat transfer plate comprising an upper distribution area in the upper portion being provided with an upper distribution pattern being different from the heat transfer pattern and/or a lower distribution area in the lower portion being provided with a lower distribution pattern being different from the heat transfer pattern, the area under stress of the heat transfer plate being in the upper distribution area and/or in the lower distribution area.

8. The method according to any of the preceding claim, wherein the area under stress of the heat transfer plate being the heat transfer area.

9. The method according to any of the preceding claims, wherein the metal reinforcement being provided in the form of a contact point intended to abut against an adjacent heat transfer plate.

10. The method according to any of the preceding claims, wherein the heat transfer pattern and/or the upper distribution pattern and/or the lower distribution pattern being provided with corrugations extending obliquely relative to the longitudinal centre axis, the metal reinforcement being provided in the form of a string of metal extending along the corrugations and/or across the corrugations.

11. The method according to claim 10, wherein the string of metal fills a part of a bottom of the corrugations.

12. The method according to any of the preceding claims, wherein the heat transfer plate being provided with an indentation at the area under stress of the heat transfer plate, the metal reinforcement being applied such that it fills the indentation.

13. The method according to any of the preceding claims, wherein the continuous length of the reinforcement exceeds 10% of the width of the heat transfer plate, preferably exceeding 20% of the width of the heat transfer plate, more preferably exceeding 30% of the width of the heat transfer plate.

14. A reinforced heat transfer plate comprising an upper portion, a central portion and a lower portion arranged in succession along a longitudinal centre axis of the reinforced heat transfer plate, the upper portion comprising a first porthole and a second porthole, the lower portion comprising a third porthole and a fourth porthole, and, the central portion comprising a heat transfer area provided with a heat transfer pattern, the reinforced heat transfer plate being provided with a reinforcement having been applied by additive manufacturing in an area under stress of the reinforced heat transfer plate.

15. A plate heat exchanger comprising a plurality of heat transfer plates according to claim 14 with gaskets in between heat transfer plates, optionally the heat transfer plates are alternately provided with a gasket and alternately provided with a permanent joint, such as a weld.
